# EUROPEAN PATENT APPLICATION

(11) **EP 1 443 478 A1**
(43) Date of publication of application: **04.08.2004**
(21) Application number: 04001461.5
(22) Date of filing: 23.01.2004
(51) Int. Cl.: G08B 13/14, B60R 25/10

(54) **Position movement alarm system**

(30) Priority: 24.01.2003 JP 2003015895
(71) Applicant: Kainzu Kabushikikaisha, Tokyo (JP)
(72) Inventor: Kaneko, Masao, Ichikawa-shi Chiba-ken (JP)
(74) Representative: Barz, Peter

(57) **Abstract**

A position movement alarm system using GPS satellites and a cellular phone system is used to transmit automatically and directly a fact of movement of a movable goods from its original position, when the goods is moved opposing to the intension of an owner of the goods due to any reasons, from a position information monitor · alarm terminal (child device)4 installed in the movable goods to owners cellular phone terminal( parent device) 2 having a GPS position information processing function through no third person organization such as an alarm center and a service center and the like.

## Description

### [Background of the Invention]

### (1) Field of the Invention

The present invention relates to a system for informing any movement of a movable goods to its owner, when the owner of the movable goods such as cars and bags etc keeps or stores the goods out of the range the owner can monitor and the goods move due to any reason from the original position without any intension of the owner by means of GPS (a global positioning system) satellites and a cellular phone system.

### (2) Description of the Prior Art

Nowadays, the position information communicating system using GPS and a cellular phone system are being employed in various shapes. A number of the position information communication system uses an intermediate organ of the third person such as a security company and an information communication company etc functionally placed between a position information receiver and a position information terminal. Also, such position information communication system doesn't use the third person and cannot transmit automatically any movement of the position of the position information transmission terminal from a side of the terminal.
When the conventional system transmits a position information through the third person such as a security company and an information communication company etc, much cost and laborious work are necessary, resulting in difficulties in use.

### [Summary of the Invention]

The present invention has been invented to solve such troubles and shortcomings above and provides a system informing any movement of a movable goods to an owner's cellular phone terminal having a GPS position information process function automatically and directly through a cellular phone circuit by means of a position movement alarm system using a GPS and a cellular phone system, from a position information monitor alarm terminal placed in the movable goods without an intermediate way of a third person such as a security company and an information communication company etc, when the owner of the movable goods such as cars and bags etc keeps or stores the movable goods out of the range the owner can monitor and the goods moves due to some reason from the original position without an intension of the owner.

The first purpose of the present invention is to provide a position movement alarm system for informing all movement of movable goods such as cars and bags etc keeps or stores the movable goods out of the range the owner can monitor and the goods moves due to any reason from the original position without an intension of the owner to the owner's cellular phone terminal having a GPS position information processing function, automatically and directly through a cellular phone circuit by means of a position movement alarm system using a GPS and a cellular phone system, from a position information monitor alarm terminal placed in the movable goods without an intermediate way of a third person such as a security company, an information communication company etc.

The second purpose of the present invention is to provide a position movement alarm system for informing a fact of robbery of the movable goods which is known by using a cellular phone circuit from a position information monitor alarm terminal placed within the movable goods to the police, in order to make a prompt arrest of the thief and a prompt recovery of the movable goods enable.

The third purpose of the present invention is to provide a position movement alarm system of a low cost and easy handling because that it is possible to know the fact of robbery of the movable goods without an intermediate way of the third person of a security company and an information communication company and the like

The purposes above and other purposes and the novel features of the present invention will be apparent by reading the following brief description of the explanation with reference to the accompanying drawings. It is noted that the drawings are to be used to only exclusively explain the invention and the inventor does not intend to restrict the range of the invention.

### [Brief Description of the Drawings]

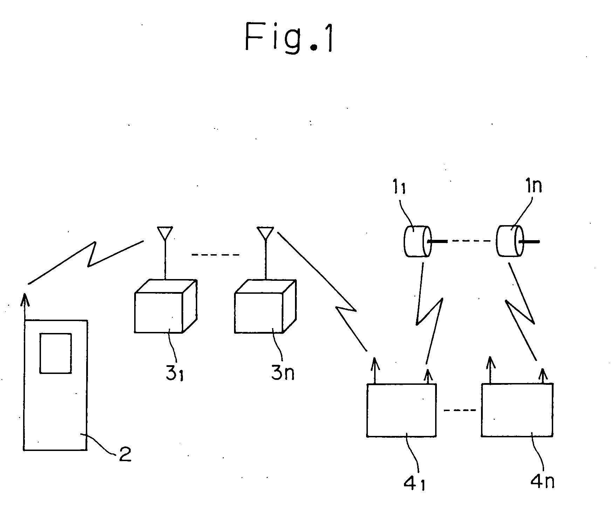

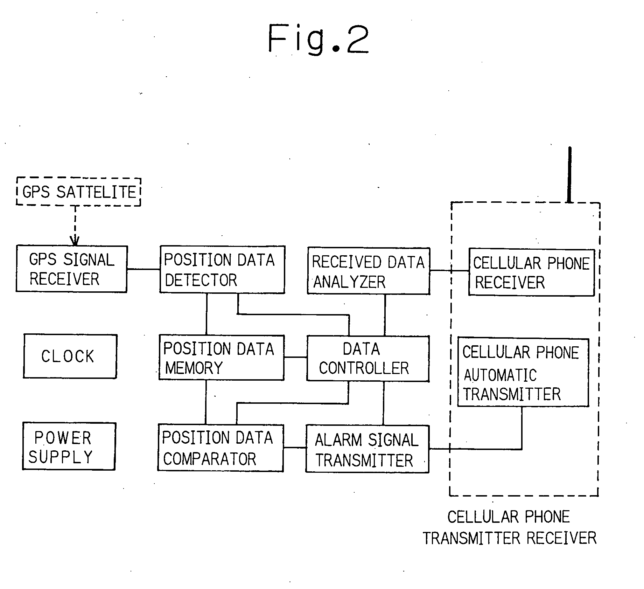

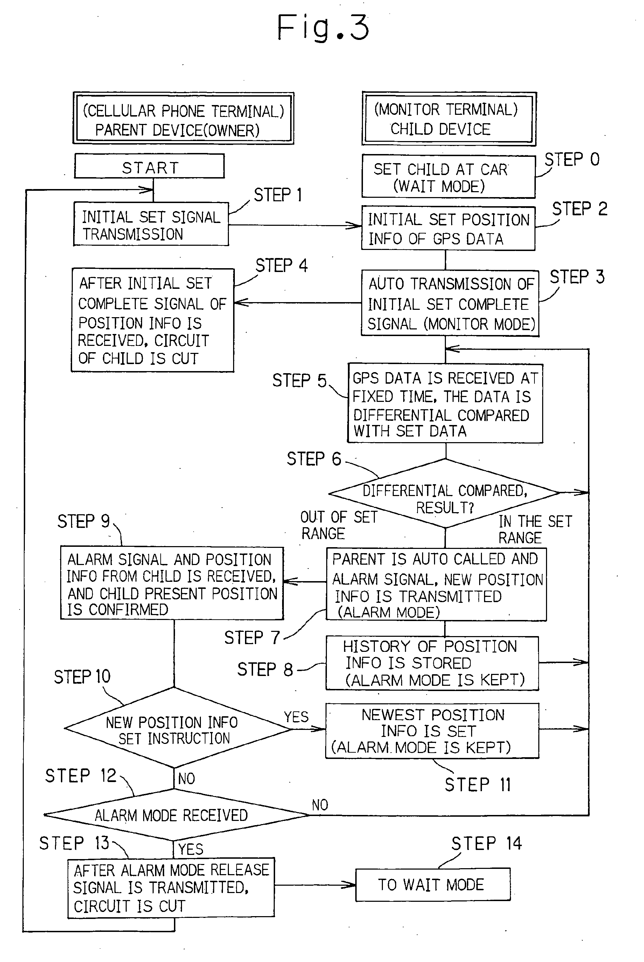

Fig 1 is a network structural view of the position movement alarm system according to the present invention. Fig 2 is an explanation view of a member arrangement of a position movement monitor alarm terminal structuring the position movement alarm system of the present invention. Fig 3 is a flow chart of the position movement alarm system of the present invention.

### [Description of the Preferred Embodiment]

The present invention is a position movement alarm system for informing a fact of movement of the movable goods such as cars and bags and the like from its original position to an owner's cellular phone terminal having a GPS position information processing function automatically and directly through a cellular phone circuit and a position movement alarm system using a GPS and a cellular phone system, when the owner of the movable goods keeps or stores the goods out of the range the owner can monitor and the goods move from the original position without any intension of the owner and due to any reason.

Fig 1 shows a network structure view of the position movement alarm system of the present invention. As shown in the accompanying drawings, the owner of a movable goods such as cars and bags and the like operates a specific communication using a cellular phone circuit from a cellular phone terminal 2 (hereinafter, it is called a parent device) having a function of processing a position information obtained from GPS satellites 1₁-1n to a position information monitor · alarm terminal 4 (hereinafter, called a child device) placed on or in the movable goods by means of a network (cellular phone base stations 3₁-3n) of the cellular phone company. A communication between the parent device 2 and the child device 4 can be attained at any places in which the network of the cellular phone communication company can be used. It is possible to communicate between one parent device 2 and a plurality of children 4₁-4n respectively.

Fig 2 is a block view or diagram showing a configuration of a child device structuring the position alarm system of the present invention. That is, the child device 4 has a function receiving radio wave transmitted from a plurality of GPS satellites 1₁-1n by its GPS signal receiver, detecting a position information of the child device 4 itself by its position data detecting portion, and recording the detected position data in a memory of its position data memory portion.

While, a cellular phone signal transmitted from the parent device 2 is received in a cellular phone receiving portion and an automatic transmission to parent device 2 through the cellular phone circuit is done by a cellular phone automatic transmission portion.

A content of an instruction information transmitted from the parent device 2 is, after the cellular phone receiving portion receives it, analyzed by a received data analyzing portion and a data control portion operates a control function according to the content. When the child device 4 receives an initial setting signal of the parent device 2, the data control portion instructs a position data storing portion so as to store the newest position data in an initial set memory, and also instructs a position data detecting portion to differentially compare successively the detected newest position data with the initial set position data by means of a position data comparison portion.

When the position data comparison portion finds that the differential comparison result is more than the previously -determined value (for example, 50m), the data control portion instructs an alarm signal transmission portion so as to transmit an alarm signal and the newest position data to the cellular phone automatic transmission portion. Then, the cellular phone automatic transmission portion automatically transmits the cellular phone circuit calling the parent device 2 and transmits an alarm signal and the newest position information of the child device 4.
It is noted that a clock portion and a power supply portion are the common block for supplying a clock signal and electric power to all blocks or portions.

Next, a flowchart of the position movement alarm system of the present invention is shown in Fig 3. The owner of the movable goods such as bags installs the monitor terminal (child device) 4 in the movable goods in order to watch or monitor the movable goods preventing the owner from suffering due to a movement of the goods opposing to an intention of the owner and owing to any reason such as robbery. The child device 4 installed in the movable goods receives signals of a GPS satellite 1 at every previously determined time interval (for example, 30 min), when the device 4 is at its powered initial condition, and enters a waiting mode in which mode the child device holds a condition storing a position information of the device 4 (Step 0).

While the child device 4 is at its waiting mode of Step 0, the owner of the movable goods such as cars and bags etc uses the cellular phone terminal (parent device) 2 and transmits an initial set signal of the position information to the child device 4 in order to set the child device at its monitor mode (Step 1). During Step 1, the child device 4 after it receives the initial set signal from the parent device 2 registers the newest position information of the child device, which has received from GPS satellites 1₁-1n, in the initial set memory as an initial set value (Step 2).

During Step 2, the child device 4 registered the newest position information in the initial set memory automatically transmits an initial set complete signal of the position information to the parent device 2, and enters a monitor mode (Step 3). Then the owner recognizes that the child device 4 has entered its monitor mode by means of the parent device 2 received the initial set complete signal of the child device 4, cuts the circuit to the child device 4, and holds this condition and waits (Step 4).

While, the child device 4 entered its monitor mode receives signals of GPS satellites 1₁-1n at every time interval (for example, 10 min) previously determined, calculates its position data, and differentially compares its position data with the initially set position data (Step 5). During Step 5, the child device 4 repeats successively the operation of this step, when the differential comparison distance obtained in the differential comparison of the position data in Step 6 as a distance measured from the initial set position drops in the range (previously determined by considering error of GPS, for example 50 m). If the result of the differential comparison of the position data is over the previously determined value (out of set range), operation is transferred to the next step.

When the result of a differential comparison of position data at Step 6 is over the previously determined value and no cellular phone circuit is set between the child device 4 and parent device 2, the parent device 2 is automatically called. When a cellular phone circuit is set between the child device 4 and parent device 2, the circuit is held and the child device 4 transmits an alarm signal informing the fact that the initial set value and the newest value of the position information are differed from each other and the newest position information of the child device 4, and entered an alarm mode (Step 7).

During Step 7, the child device 4 at its alarm mode repeats the operations of Step 5 until a new instruction comes from the parent device 2 in order to memorize a history of the newest position information at each time of the operations and stores the history (Step 8). During Step 7, the owner recognizes that the child device 4 is at its alarm mode by means of the parent device 2 having an alarm signal received and a position information of the child device 4 transmitted from the device 4, and confirms the newest position information of the device 4 by means of a map information processing function and the like (Step 9). Then, the owner resets the newest position information of the child device as a new initial set value. When it is YES, a signal for resetting the newest position information of the child device 4 as an initial set value is transmitted to the child device (Step 10). The child device 4, after receiving a signal for resetting the newest position information of the child device 4 as an initial set value from the parent device 2 in Step 10, resets the newest position information of the child device, memorizes it in the initial set memory as an initial set value, and keeps an alarm mode successively (Step 11).

While, when the owner orders NO for not instructing a set of a new position information to the child device 4 in Step 10 after the child device recognizes the newest position information of the child device 4 in Step 9, and wants to obtain successively the newest position information of the child device 4, an alarm mode is kept at a condition in which the cellular phone circuit connected to the child device 4 is held (Step 12).

When the owner wants to say YES and to release the alarm mode of the child device 4 which mode is set at Step 12, the parent device 2 transmits an alarm mode release signal to the child device 4 to cut the cellular phone circuit (Step 13), transferring to an initial condition of start.

Furthermore, in case of NO, in which the alarm mode is not released at Step 12, the child device 4 at its alarm mode repeats the operations of Step 5 and after the step until a new instruction comes from the parent device 2, and memorizes a history of the newest position information at each operation and stores the history.

Last, in Step 13, the child device 4 which has received an alarm mode release signal from the parent device 2 clears the initial set information, transferred to its waiting mode (Step 14), and returns to a condition of Step 0.

That is, according to the position movement alarm system of the. present invention, the owner of the movable goods such as cars and bags etc the owner wants to watch and monitor installs a child device 4 in the goods and sets the child device 4 at its waiting condition.

The child device 4 installed in the movable goods such as cars and bags etc receives radio wave from GPS satellites 1₁-1n regularly (every time previously set, for example, every 30 min), recognizes and memorizes its position information.

When the owner wants to set the child device 4 at its alarm mode, the owner uses the parent device 2 having a function processing the position information from GPS satellites 1₁-1n in order to transmit a position information initial set instruction signal to the child device through a cellular phone circuit. The child device 4 registers, after it receives a position information initial set instruction signal from the parent device 2, the stored newest position information in the initial set memory as an initial set value, receives radio wave from GPS satellite 1₁-1n successively and regularly at every previously set time, for example. 10 min; and compares it with the initial set value of the position at every time of receiving.

If the comparison result surpasses the previously set error range (for example, 50 m), the child device 4 automatically transmits radio wave to the cellular phone circuit, connecting it with the parent device 2, and transmits an alarm signal and a new position information directly to the parent device 2, resulting in that the owner of the movable goods is informed of the fact of movement of the movable goods from its original position. The owner is made known of the fact of movement of the movable goods from its original position by means of the information transmission mentioned above and supposes that the movable goods is robbed, so it is possible to swiftly inform of the fact to the police.

According to the position movement alarm system of the present invention described above, the following effects are attained.

The position movement alarm system of the present invention informs automatically and directly, when the owner of movable goods such as cars and bags etc places or stores the goods at a place out of the monitor-able range and the goods move owing to some reasons from its original position without any relation to an intension of the owner, of the fact that the movable goods has moved from its original to the owner by means of a position movement alarm system using GPS or the cellular phone system from the child device installed in the movable goods to the owner through no security company and no information communication company of the third person organization. So that, it is possible to provide a position movement alarm system of easy handling and economical and able to quickly and directly inform of the fact of robbery of the movable goods to the police.

Furthermore, the position movement alarm system of the present invention employs a plurality of child device identification signals, so that it is possible to simultaneously monitor a plurality of child device by means of only one parent device, receives signals from GPS satellites and can use in all areas in which the cellular phone circuit is able to use. Accordingly, it is possible to obtain and use a very economical position movement alarm system.

## Claims

1. A position movement alarm system for, when an owner of a movable goods places or stores the movable goods in a place out of the owner's monitor range and the movable goods moves opposing to an intension of the owner, for example, robbery etc, transmitting an alarm signal and a new position information of a fact of movement of the movable goods from its original position, from a position information monitor · alarm terminal installed in the movable goods having a position information receiving function, a cellular phone receiving function and an automatic transmission function to a cellular phone terminal having GPS position information processing function of the owner automatically and directly by means of no third person such as a security company and an information communication company etc.

2. The position movement alarm system for, when an owner of a movable goods places or stores the movable goods in a place out of the owner's monitor range and the movable goods moves opposing to an intension of the owner, for example, robbery etc, transmitting an alarm signal and a new position information of a fact of movement of the movable goods from its original position, from a position information monitor · alarm terminal installed in the movable goods having a position information receiving function, a cellular phone function and an automatic transmission function to a cellular phone terminal having GPS position information processing function of the owner automatically and directly by means of no third person such as a security company and an information communication company etc, wherein a position information from GPS satellites is received and stored at every previously determined time interval, the stored position information is automatically compared with a new position information newly transmitted from GPS satellite at a time instructed by owner's cellular phone terminal provided with GPS position information processing function, when a difference between two information values surpasses a previously-determined error range, the alarm and a new position information are automatically transmitted to the cellular phone terminal provided with GPS position information processing function.
